# EUROPEAN PATENT APPLICATION

(11) **EP 4 715 645 A1**
(43) Date of publication of application: **25.03.2026**
(21) Application number: 24201036.1
(22) Date of filing: 18.09.2024
(51) Int. Cl.: G06F 21/53, G06F 21/56, G06F 21/57, H04L 9/40

(54) **A COMPUTER-IMPLEMENTED METHOD FOR CONDUCTING CYBER SECURITY ANALYSIS AND DETECTING POTENTIAL CYBER THREATS**

(71) Applicant: Argus Cyber Security Ltd, 6789155 Tel Aviv (IL)
(72) Inventor: Bari-Ephraim, Yael, 5252171 Ramat Gan (IL); Lavi, Oron, 5252171 Ramat Gan (IL); Ben-Aharon, Dolev, 5252171 Ramat Gan (IL)
(74) Representative: Aumovio Corporation

(57) **Abstract**

In order to improve the software development cycle, in particular by catching cyber threats at an early stage of development, the invention proposes a computer-implemented method for conducting cyber security analysis and detecting potential cyber threats (91) in a software resource under inspection (6) by a virtual inspection environment (2), the method comprising: a virtual inspection environment (2) executing and/or storing the software resource under inspection (6) and at least one inspection module (7) that is capable of detecting at least one type of cyber threat (91) in the software resource under inspection (6), wherein each inspection module (7) inspects the software resource under inspection (6) to obtain detection result data (8), which are indicative of the presence of a cyber threat (91) within the software resource under inspection (6), wherein the virtual inspection environment (2) determines cyber threat candidates (9) based on the detection result data (8), wherein the virtual inspection environment (2) evaluates the cyber threat candidates (9) to identify a cyber threat (91), wherein the virtual inspection environment (2) generates a cyber threat report (10) based on the identified cyber threats (91), and the cyber threat report (10) includes an alert entry (101) for each identified cyber threat (91) and each alert entry (101) gets assigned a cyber threat priority based on at least one characteristic of the identified cyber threat (91).

## Description

### TECHNICAL FIELD

The invention relates to a computer-implemented method for conducting cyber security analysis and detecting potential cyber threats in a software resource. The invention further relates to a data processing system and a computer program.

### BACKGROUND

Software components are ubiquitous in modern products of all kinds. Therefore, especially in the field of automotive industry, certain standards need to be met before a software resource may be deployed. There are different ideas and approaches to keep the software resource safe during deployment.

However, current solutions typically lack a holistic comprehensive cybersecurity strategy that is tailored to virtual environments, including cloud environments and virtual ECUs.

EP 3 148 236 B1 discloses a method for controlling access to an in-vehicle communication network.

EP 4 307 609 A1 discloses a method for a decentralized intrusion detection system.

EP 3 958 154 A1 discloses a method for dynamically validating software during a boot sequence.

EP 3 916 598 A1 discloses a method for detecting exploitation of a vulnerability of software.

EP 3 889 815 B1 discloses a method for logging, reporting, or preventing an attempt to access or use a resource in a computing device.

### SUMMARY OF THE INVENTION

It is the object of the invention to improve the manufacturing of software controlled devices, preferably with regard to effective testing times and/or cyber security.

The object is achieved by the subject-matter of the independent claims. Preferred embodiments are subject-matter of the dependent claims.

The invention provides a computer-implemented method for conducting cyber security analysis and detecting potential cyber threats in a software resource under inspection by a virtual inspection environment, the method comprising:
a virtual inspection environment executing and/or storing the software resource under inspection and at least one inspection module that is capable of detecting at least one type of cyber threat in the software resource under inspection,
wherein each inspection module inspects the software resource under inspection to obtain detection result data, which are indicative of the presence of a cyber threat within the software resource under inspection,
wherein the virtual inspection environment determines cyber threat candidates based on the detection result, wherein the virtual inspection environment evaluates the cyber threat candidates to identify a cyber threat,
wherein the virtual inspection environment generates a cyber threat report based on the identified cyber threats, and the cyber threat report includes an alert entry for each identified cyber threat and each alert entry gets assigned a cyber threat priority based on at least one characteristic of the identified cyber threat.

Software controlled devices, such as electronic control units (ECUs) for vehicles, are typically developed on the hardware side and on the software side by different teams of engineers. In other words, in the development of ECUs, the software and hardware manufacturing can be performed by different companies. Moreover, the software and hardware components of the ECU are typically inspected for compliance of certain standards in the automotive industry, such as ISO 26262-3:2018. A virtual inspection environment provides the components that are needed for inspection. This includes on the one hand the software resource under inspection (SRUI) and one or more inspection modules that perform different inspection tasks. The SRUI can be of executable type or precursors thereof, or of non-executable type. The virtual inspection environment allows to inspect the SRUI before it is deployed to the ECU, for example. Thus, it is not necessary to have a hardware ECU available for inspection. As a result, cyber threats that may be present in the SRUI can be detected earlier and dealt with before deployment, thereby reducing the risk of successful cyber-attacks and/or cost.

Preferably the method further comprises a virtual computing device that is implemented by executable code that simulates and/or emulates a hardware computing device on which the software resource under inspection is to be deployed. With a virtual computing device that is provided in the virtual inspection environment, it is possible to test SRUI that will be deployed on physical hardware, without the need for having the physical hardware.

Preferably, the virtual inspection environment executes the executable code and the virtual computing device executes and/or stores the software resource under inspection. The SRUI can be tested on the virtual computing device as if it was being executed on the physical hardware that is simulated/emulated by the virtual computing device. The SRUI may be of executable or non-executable type.

Preferably, the software resource under inspection is executable code that implements a virtual computing device that simulates and/or emulates a hardware computing device, wherein the virtual inspection environment executes the executable code as the software resource under inspection. This allows the virtual inspection environment to inspect the virtual computing device as the SRUI as if the virtual computing device was running as the physical hardware. Thus, any cyber threats that may arise from the hardware itself may be identified.

Preferably, the virtual computing device is a virtual ECU that simulates and/or emulates a hardware ECU. Preferably, the virtual ECU is a virtual in-vehicle ECU that simulates and/or emulates a hardware in-vehicle ECU of a vehicle. An application of the ideas presented herein is the inspection of software that implements the hardware ECU as virtual ECU that behaves the same as the hardware ECU. Furthermore, the ECU can be one of the typical ECUs present in automotive vehicles, such as brake ECU, park brake ECU, accelerator ECU, and any other type of ECU that is typically present in vehicles.

Preferably, the software resource under inspection includes or interacts during deployment with any of an operating system, an application software, a process software, a network interface, a filesystem, a hardware interface, and documentation. Depending on the type of SRUI, different software components can be inspected. The operating system controls the hardware and provides interfaces for higher-level software. Application software involves user interaction, possibly via a GUI or other human-machine interface (HMI), such as speech, gesture, and the like. Process software does not have user interaction but is typically executed in the background to perform a task.

Preferably, the inspection module is configured as a fuzzing module that fuzzes the software resource under inspection. The fuzzing module sends random test inputs to the SRUI and analyses its response. Based on the response, the fuzzing module is able to determine the presence of a possible cyber threat. While fuzzing is generally known, an embodiment of a fuzzing module is described in EP 4 137 977 A1, whose content is incorporated herein for purposes of disclosure.

Preferably, the inspection module is configured as a security testing module that executes a series of pre-defined actions or network messages over a network interface and analyses the responses of the software resource under inspection. With the security testing module the network security is inspected. One idea is to test the network interface itself in view of different actions or network messages.

Preferably, the inspection module is configured as a vulnerability scanning module that scans for known vulnerabilities in the software resource under inspection. The vulnerability scanning module may include some form of list or data that indicate known vulnerabilities in the SRUI or other pieces of software that are used in implementing the SRUI, such as code libraries. The vulnerability scanning module can find the known vulnerabilities in the SRUI. This can be done on human readable code or machine readable code alike.

Preferably, the inspection module is configured as an exploit testing module that executes and exploits known vulnerabilities included in the software resource under inspection. The exploit testing module allows to perform known or typical exploits on the SRUI and to determine, depending on the response of the SRUI, whether and if so which exploit is present.

Preferably, the inspection module is configured as a system monitoring module for role-based permissions analysis and log analysis. The system monitoring module is able to analyze the permissions of different roles of users, such as (regular) users, superusers, admins, etc. Furthermore, the system monitoring module may analyze the logs kept by the SRUI or the virtual inspection environment in order to find irregular or unwanted behavior.

Preferably, the inspection module is configured as a requirement analysis module that analyses documentation about the software resource under inspection. The requirement analysis module checks the documentation of the SRUI, which may be in the form of a separate file or comments in the SRUI. This helps to enforce compliance with documentation requirements

Preferably, the system monitoring module analyses any of a role-based permission configuration and system logs and a configuration file of the software resource under inspection. Preferably, the configuration file includes at least one configuration entry that controls user permissions of the software resource under inspection. Preferably, the system monitoring module identifies unsecured permissions. With this approach it is possible to identify cyber threats that may arise from wrongly set permissions which otherwise would allow non-authorized actors to escalate their permission level.

Preferably, the vulnerability scanning module analyzes vulnerabilities applicable for the software resource under inspection.

Preferably, the system decomposition module modifies code in the software resource under inspection so that every attempt by a code library in the software resource under inspection to load another code library is reported, generating a list of code libraries being used in the software resource under inspection.

Preferably, the security testing module accesses and/or manipulates the software resource under inspection, preferably during runtime.

Preferably, the requirement analysis module analyses documentation files describing any of the components of the system. By inspecting the documentation it is possible to identify cyber security threats related to the system under inspection, highlight requirements or architectural aspects that may create a security risk. Furthermore, it is possible to propose possible changes to mitigate or remove the threats based on the analysis of the documentation files.

Preferably, the virtual inspection environment generates a cyber threat report based on the identified cyber threats, wherein the cyber threat report includes an alert entry for each identified cyber threat, and each alert gets assigned a cyber threat priority based on at least one characteristic of the identified cyber threat.

Preferably, the virtual inspection environment generates a threat mitigation proposal for at least one of the identified cyber threats, wherein the threat mitigation proposal is configured, upon implementation in the software resource under inspection, to reduce a threat rating of the respective identified cyber threat.

Preferably, the virtual inspection environment applies at least one of the mitigation measures in the threat mitigation proposal to the SRUI or its source code. Preferably, the virtual inspection environment provides a piece of code that is configured to mitigate at least one of the identified cyber threats. Preferably, the virtual inspection environment automatically and/or the user manually apply the piece of code to the SRUI or its source code. Preferably, the piece of code is taken from a set of code templates, wherein each code template is associated with a mitigation measure and/or a cyber threat. Preferably, the piece of code is generated by a large language model based on the mitigation measure and/or the identified cyber threat.

Preferably, virtual inspection environment runs on a virtual cloud machine or a virtual cloud environment.

The invention provides a data processing system comprising means that are configured for carrying a previously described method.

The invention provides a computer program comprising instructions that, upon execution by a data processing device, or a distributed data processing device, cause said device to perform a previously described method.

The invention provides a machine readable data storage medium that stores the computer program.

The invention provides a data transmission signal that transmits the computer program.

In general, the ideas described herein help to enforce compliance with safety and security standards, specifically in the automotive field. It is also possible to enforce best practices that due to experience are known to or at least are typically recognized in helping to avoid the viability of cyber threats.

### BRIEF DESCRIPTION OF THE DRAWINGS

Embodiments of the invention are described in more detail with reference to the accompanying schematic drawings.

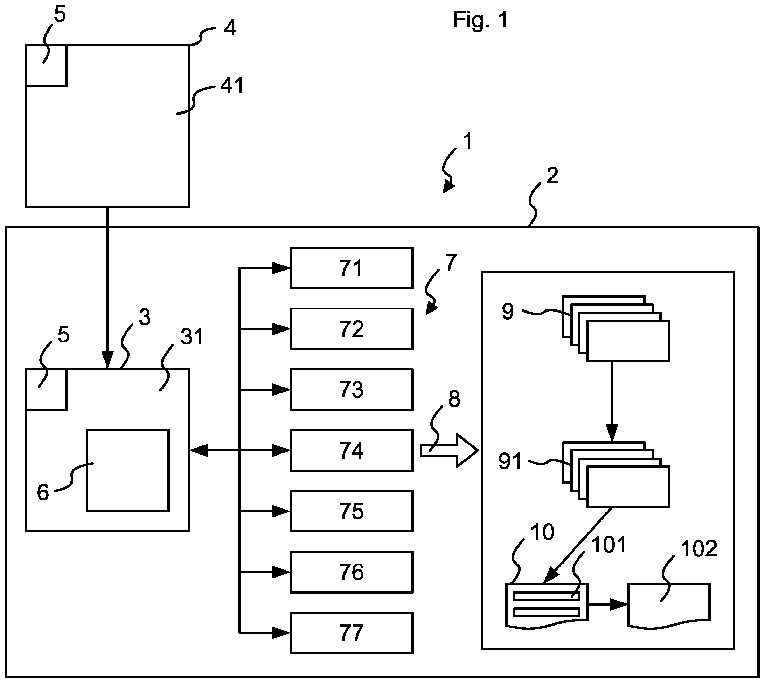

Fig. 1 depicts an embodiment of a method for conducting cyber security analysis and detecting potential cyber threats in an in-vehicle ECU.

### DETAILED DESCRIPTION OF EMBODIMENT

Fig. 1 schematically depicts a virtual cloud environment 1. The virtual cloud environment 1 is typically a distributed computing system that provides computational resources to user via the internet. The virtual cloud environment 1 is set up to run a virtual inspection environment 2.

The virtual inspection environment 2 is configured for conducting cyber security analysis and detecting potential cyber threats in a software resource under inspection (SRUI) 6. The virtual inspection environment 2 includes a plurality of virtual computing devices 3. Each virtual computing device 3 is configured to emulate a hardware computing device 4.

The virtual computing device 3 may be a virtual in-vehicle ECU 31 that emulates a hardware in-vehicle ECU 41, e.g., a door control unit (DCU), an engine control unit, a power steering control unit (PSCU), a human-machine interface (HMI), a powertrain control module (PCM), a transmission control module (TCM), a seat control unit, a speed control unit (SCU), a telematic control unit (TCU), a brake control module (BCM), a battery management system (BMS), etc.

The virtual computing device 3 may have a network interface 5, which allows the respective virtual computing device 3 to emulate communications with other virtual computing devices 3. Furthermore, the network interface 5 may be used to communicate with the virtual inspection environment 2. It should be noted, however, that the virtual inspection environment 2 may directly access the virtual in-vehicle ECU 31 as the virtual in-vehicle ECU 31 can be stored and/or executed in the virtual inspection environment 2.

In the following, the virtual in-vehicle ECU 31 is assumed to be the SRUI 6 which is to be analyzed.

The virtual inspection environment 2 includes a plurality of inspection modules 7. Each inspection module 7 is configured to inspect the SRUI 6 in order to obtain detection result data 8 that are indicative of the presence of a cyber threat 91. Each inspection module 7 is able to detect a different type of cyber threat 91. In addition some inspection modules 7 may be able to detect the same type of cyber threat 91, but with different approaches or analysis methods. Each inspection module 7 may access a virtual memory and/or virtual CPU of the virtual inspection environment 2, where the virtual memory and/or virtual CPU are currently involved in storing and/or executing the SRUI 6.

At least one of the inspection modules 7 may be configured as a fuzzing module 71. The fuzzing module 71 sends random test cases to the SRUI 6 and records its response and/or state within the virtual memory and/or the virtual CPU. The random test cases may be completely randomly generated data or test cases that are randomly chosen from a predetermined list of test cases.

The fuzzing module 71 monitors the SRUI 6 for detection result data 8 that are typically associated with cyber threat candidates 9, such as crashes, failing built-in code assertions, or potential memory leaks and the like.

At least one of the inspection modules 7 may be configured as a security testing module 72. The security testing module 72 may execute a series of pre-defined actions or network messages on the network interface 5 in order to inspect the SRUI 6. The security testing module 72 monitors the response sent by the SRUI 6 via the network interface 5 to each pre-defined action or network message. The security testing module 72 analyses the responses of the SRUI 6 and processes the responses as detection result data 8.

At least one of the inspection modules 7 may be configured as a system decomposition module 73. The system decomposition module 73 monitors each call within the SRUI 6 that is configured to load code libraries. The system decomposition module 73 may monitor the calls by analyzing the SRUI 6 in source code format or in compiled and/or linked code format. In the latter case, instead of searching the SRUI 6 for a call to load, the system decomposition module 73 may monitor the virtual memory and/or virtual CPU used by the SRUI 6 for a call to load during runtime. The system decomposition module 73 may generate a list of the monitored calls and using a database of software libraries may identify the code libraries that are called in the SRUI 6. The calls and/or the generated list are examples of detection result data 8.

At least one of the inspection modules 7 may be configured as a vulnerability scanning module 74. The vulnerability scanning module 74 scans for known vulnerabilities in the SRUI 6 or any software resource that is included in the SRUI 6, such as the previous mentioned code libraries. The vulnerability scanning module 74 may base its scan on the detection result data 8 of the system decomposition module 73. The vulnerability scanning module 74 may scan the SRUI 6 in source code format or executable format; however, the source code format is preferred. The vulnerability scanning module 74 may have a database of code libraries and the known vulnerabilities associated therewith. The vulnerability scanning module 74 can generate a list of used code libraries and known vulnerabilities that are present in the SRUI 6 due to the use of the respective code libraries. This list is an example for detection result data 8 obtained by the vulnerability scanning module 74.

At least one of the inspection modules 7 may be configured as an exploit testing module 75. The exploit testing module 75 executes known exploits on known vulnerabilities within the SRUI 6. The exploit testing module 75 preferably executes exploits that can be derived from the detection result data 8 of the system decomposition module 73 and/or the vulnerability scanning module 74. The exploit testing module 75 can also simply execute exploits form a predetermined list without taking into account previously obtained detection result data 8. The exploit testing module 75 may have a database of known vulnerabilities and known exploits that are able to exploit the vulnerabilities to, for example, get unauthorized access or permissions in the SRUI 6. The exploit testing module 75 can generate a list that includes vulnerabilities, associated exploits, and an indication whether the exploit was successful. This list is an example for detection result data 8 obtained by the exploit testing module 75.

At least one of the inspection modules 7 may be configured as a system monitoring module 76. The system monitoring module 76 may monitor the role-based permissions that are set in the SRUI 6 and compare them to a list of given role-based permissions that has been checked for validity and compliance, for example, with a predetermined standard or guidelines. In case the system monitoring module 76 detects a deviation between the predetermined value and the actual value in the SRUI 6, the system monitoring module 76 stores the deviation as detection result data 8.

The system monitoring module 76 may also analyze logs that are generated by the SRUI 6 during its execution in the virtual inspection environment 2, specifically on the virtual computing device 3. The system monitoring module 76 may analyze the logs by searching certain types of entries, e.g., by using queries with regular expressions. In another approach, the system monitoring module 76 may involve a trained large language model that analyses the logs. During the analysis, the system monitoring module 76 is thus able to identify log entries that have been associated with cyber threat candidates 9 in the past. The log entries are also stored as detection result data 8 for further processing.

At least one of the inspection modules 7 may be configured as a requirement analysis module 77. The requirement analysis module 77 is configured to analyze documentation and/or specification of the SRUI 6 that was given to the developer. The requirement analysis module 77 may extract from the documentation, which may come in the form of comments within the SRUI 6 or as a separate file or both, requirements that need to be met by the SRUI 6. This may be supported by a standardized documentation format. For example, the requirements may directly be in the form of a check-list. It is also possible to use a standardized modelling language, such as UML to describe the requirements that need to be met by the SRUI 6. Tw

Referring to Fig. 1 a method for conducting cyber security analysis of the SRUI 6 is described in more detail.

The SRUI 6 is loaded into the virtual inspection environment 2. The inspection modules 7 are executed and perform their tasks on the SRUI 6 within the virtual inspection environment 2 to obtain the detection result data 8.

The virtual inspection environment 2 evaluates the detection result data 8 to generate a list of cyber threat candidates 9. Subsequently, the virtual inspection environment 2 identifies cyber threats 91 within the cyber threat candidates 9. The virtual inspection environment 2 assigns to each cyber threat 91 a cyber threat priority. The cyber threat priority may be obtained from a look-up-table that is predetermined and includes typical threat priorities. The cyber threat priority may be determined as the average of several threat priorities.

The virtual inspection environment 2 generates a cyber threat report 10 that includes an alert entry 101 for each cyber threat 91. The cyber threat report 10 may be generated such that it only contains alert entries 101 for cyber threats 91 that exceed a predetermined, but adjustable, threshold.

The virtual inspection environment 2 may also generate a threat mitigation proposal 102 based on the cyber threat report 10. The threat mitigation proposal 102 includes a plurality of mitigation measures that are associated with the alert entries 101 of the cyber threat report 10. The virtual inspection environment 2 may perform an automated internet search for the identified cyber threats 91 and to obtain mitigation measures. The virtual inspection environment 2 may be supported by a large language model.

In a preferred variant, the virtual inspection environment 2 may in addition to generating the thread mitigation proposal 102 allow the user to choose at least one of the measures in the threat mitigation proposal 102. The user selected measures can then be automatically applied to the SRUI 6 or its source code.

For example, if the threat mitigation proposal 102 proposes a range check for a certain input in order to mitigate a specific cyber threat 91, the virtual inspection environment 2 may provide a predetermined piece of code that implements a range check in the SRUI 6 or its source code. The user can then decide whether to accept the proposed mitigation or to write their own code to mitigate the cyber threat 91.

With the disclosed method it is possible to identify cyber threats at a very early stage in the development cycle. Furthermore, the actual hardware on which the SRUI 6 is deployed is not needed for the inspection. Consequently, it is possible to detect errors in the SRUI 6 much earlier and with greater efficiency.

While the method was described with the SRUI 6 implementing the hardware in-vehicle ECU 41, the skilled person will understand that the SRUI 6 may also be software of any kind that can be stored, executed or used on the hardware in-vehicle ECU 41 at deployment time.

### REFERENCE SIGNS

1 virtual cloud environment
2 virtual inspection environment
3 virtual computing device
31 virtual in-vehicle ECU
4 hardware computing device
41 hardware in-vehicle ECU
5 network interface
6 software resource under inspection (SRUI)
7 inspection module
71 fuzzing module
72 security testing module
73 system decomposition module
74 vulnerability scanning module
75 exploit testing module
76 system monitoring module
77 requirement analysis module
8 detection result data
9 cyber threat candidate
91 cyber threat
10 cyber threat report
101 alert entry
102 threat mitigation proposal

## Claims

1. A computer-implemented method for conducting cyber security analysis and detecting potential cyber threats (91) in a software resource under inspection (6) by a virtual inspection environment (2), the method comprising:
a virtual inspection environment (2) executing and/or storing the software resource under inspection (6) and at least one inspection module (7) that is capable of detecting at least one type of cyber threat (91) in the software resource under inspection (6),
wherein each inspection module (7) inspects the software resource under inspection (6) to obtain detection result data (8), which are indicative of the presence of a cyber threat (91) within the software resource under inspection (6),
wherein the virtual inspection environment (2) determines cyber threat candidates (9) based on the detection result data (8), wherein the virtual inspection environment (2) evaluates the cyber threat candidates (9) to identify a cyber threat (91),
wherein the virtual inspection environment (2) generates a cyber threat report (10) based on the identified cyber threats (91), and the cyber threat report (10) includes an alert entry (101) for each identified cyber threat (91) and each alert entry (101) gets assigned a cyber threat priority based on at least one characteristic of the identified cyber threat (91).

2. The method of claim 1, further comprising a virtual computing device (3) that is implemented by executable code that simulates and/or emulates a hardware computing device (4) on which the software resource under inspection (6) is to be deployed, wherein the virtual inspection environment (2) executes the executable code and the virtual computing device (3) executes and/or stores the software resource under inspection (6); or
wherein the software resource under inspection (6) is executable code that implements a virtual computing device (3) that simulates and/or emulates a hardware computing device (4), wherein the virtual inspection environment (2) executes the executable code as the software resource under inspection (6).

3. The method of any of the preceding claims, wherein the virtual computing device (3) is a virtual ECU that simulates and/or emulates a hardware ECU, wherein the virtual ECU is a virtual in-vehicle ECU (31) that simulates and/or emulates a hardware in-vehicle ECU (41) of a vehicle.

4. The method of any of the preceding claims, wherein the software resource under inspection (6) implements or interacts during deployment with any of an operating system, an application software, a process software, a network interface, a filesystem, a hardware interface, and documentation.

5. The method of any of the preceding claims, wherein each inspection module (7) is chosen from a group consisting of
- a fuzzing module (71) that fuzzes the software resource under inspection;
- a security testing module (72) that executes a series of pre-defined actions or network messages over a network interface (5) and analyses the responses of the software resource under inspection (6);
- a system decomposition module (73) that monitors and reports each call to load code libraries in the software resource under inspection (6);
- a vulnerability scanning module (74) that scans for known vulnerabilities in the software resource under inspection (6);
- an exploit testing module (75) that executes and exploits known vulnerabilities included in the software resource under inspection (6);
- a system monitoring module (76) that analyses role-based permissions and logs; and
- a requirement analysis module (77) that analyses documentation about the software resource under inspection (6).

6. The method of claim 5, wherein the security testing module (72) accesses and/or manipulates the software resource under inspection (6), preferably during runtime.

7. The method of any of the claims 5 or 6, wherein the system decomposition module (73) modifies code in the software resource under inspection (6) so that every attempt by a code library in the software resource under inspection (6) to load another code library is reported, generating a list of code libraries being used in the software resource under inspection (6).

8. The method of any of the claims 5 to 7, wherein the vulnerability scanning module (74) analyses vulnerabilities applicable for the software resource under inspection.

9. The method of any of the claims 5 to 8, wherein the system monitoring module (76) analyses any of a role-based permission configuration and system logs and a configuration file of the software resource under inspection, wherein the configuration file includes at least one configuration entry that controls user permissions of the software resource under inspection, and the vulnerability scanning module identifies unsecured permissions.

10. The method of any of the claims 5 to 9, wherein the requirement analysis module (77) analyses documentation files describing any of the components of the system.

11. The method of any of the preceding claims, wherein the virtual inspection environment (2) generates a threat mitigation proposal (102) for at least one of the identified cyber threats (91), wherein the threat mitigation proposal (102) is configured, upon implementation in the software resource under inspection (6), to reduce a threat rating of the respective identified cyber threat (91).

12. The method of any of the preceding claims, wherein the virtual inspection environment (2) runs on a virtual cloud machine or a virtual cloud environment.

13. A data processing system comprising means that are configured for carrying a method according to any of the preceding claims.

14. A computer program comprising instructions that, upon execution by a data processing device, or a distributed data processing device, cause said device to perform a method of any of the claims 1 to 13.

15. A machine readable storage medium or a data transmission signal including the computer program of claim 14.
